# EUROPÄISCHE PATENTSCHRIFT

(11) **EP 2 208 002 B1**
(45) Veröffentlichungstag und Bekanntmachung des Hinweises auf die Patenterteilung: **16.03.2016**
(21) Anmeldenummer: 08802062.3
(22) Anmeldetag: 12.09.2008
(51) Int. Cl.: F24D 5/08, F24D 11/00

(54) **ANORDNUNG ZUM BEHEIZEN VON GEBÄUDEN MIT EINER INFRAROT-HEIZUNG**
ARRANGEMENT FOR HEATING BUILDINGS HAVING AN INFRARED HEATING SYSTEM
DISPOSITIF DE CHAUFFE DE BÂTIMENTS PAR CHAUFFAGE AUX INFRA-ROUGES

(30) Priorität: 18.09.2007 DE 102007044670; 05.10.2007 DE 102007047661
(43) Veröffentlichungstag der Anmeldung: 21.07.2010
(73) Patentinhaber: Kübler GmbH, 67065 Ludwigshafen (DE)
(72) Erfinder: KÜBLER, Thomas, 68163 Mannheim (DE)
(74) Vertreter: Kesselhut, Wolf
(86) Internationale Anmeldenummer: PCT/EP2008/007502
(87) Internationale Veröffentlichungsnummer: WO 2009/036927

(56) Entgegenhaltungen:
- EP-A1- 0 643 273
- EP-A2- 0 877 208
- CH-A- 438 631
- GB-A- 2 189 314
- US-A- 4 727 854

## Beschreibung

Die Erfindung betrifft eine Anordnung zum Beheizen von Gebäuden mit einer Infrarot-Heizung gemäß Anspruch 1.

Derartige Infrarot-Heizungen werden von der Anmelderin seit langem vertrieben und umfassen ein in der Regel horizontal aufgehängtes, nach unten hin offenes Gehäuse, in welchem ein Strahlungsrohr aufgenommen ist, das durch einen Brenner, insbesondere durch einen Gasbrenner, und ein Gebläse mit erhitzter Luft beaufschlagt wird. Aufgrund der hierdurch erzeugten Temperatur der in der Regel schwarzen Außenseite des Strahlungsrohres im Bereich von 300 °C bis 750 °C strahlt dieses Infrarot-Strahlung nach Art eines schwarzen Körpers ab, welche zu einer direkten Erwärmung der Umgebung unterhalb des Strahlungsrohres führt. Hierbei ist es gegenüber herkömmlichen Gebäude-Heizungen, bei denen Heizkörper wie z.B. Radiatoren zum Einsatz gelangen, von Vorteil, dass in einem Gebäude lediglich die Oberflächen von Menschen, Tieren und Gegenständen durch die Infrarotstrahlung erwärmt werden, nicht jedoch das Luftvolumen innerhalb des Gebäudes, so dass die beschriebenen Infrarotheizungen vergleichsweise ökonomisch arbeiten und demgemäß bevorzugt zum Beheizen von Hallen eingesetzt werden.

Bei den bekannten Infrarot-Heizungen der zuvor genannten Art ergibt sich das Problem, dass die Restwärme im erhitzten Gas nach dem Verlassen des Strahlungsrohres nur unzureichend genutzt wird, wodurch sich der Gesamtwirkungsgrad der beschriebenen Infrarot-Heizungen verschlechtert.

Aus der US 4,699,316 ist eine Heizungsanordnung zum Beheizen eines Gewächshauses bekannt, bei der ein durch einen Brenner mit Heißgas beaufschlagtes Strahlungsrohr strömungsmäßig mit einem Wärmetauscher verbunden ist, in welchem Wasser erwärmt wird, das im Anschluss daran zum Bewässern der im Gewächshaus, d.h. im selben Gebäude, enthaltenen Pflanzen verwendet wird. Um das Abgas durch das Strahlungsrohr zu fördern, ist stromabwärts des Wärmetauschers ein Gebläse vorgesehen, welches das Abgas mithilfe von Unterdruck durch den Wärmetauscher hindurch aus dem Strahlungsrohr heraus fördert. Das Dokument gibt keinen Hinweis darauf, das erwärmte Wasser zum Beheizen eines weiteren, thermisch isolierten Gebäudes einzusetzen, und das Gebläse stromaufwärts des Wärmetauschers anzuordnen.

Weiterhin ist aus dem Arbeitsblatt G 638/II des DVGW Regelwerks Ausgabe April 1995 eine Heizungsanordnung mit Dunkelstrahlern bekannt, die parallel an eine Abgas-Sammelleitung angeschlossen sind, welche durch einen Abgasventilator mit Unterdruck beaufschlagt wird, um das Abgas aus der Abgas-Sammelleitung ins Freie zu leiten. Der Abgasventilator ist dabei stromabwärts eines Anschlusses für die Kondenswasserableitung angeordnet. Das Dokument gibt weiterhin keinen Hinweis darauf, die Abgas-Sammelleitung thermisch zu isolieren und zwischen dem Gebläse und den Dunkelstrahlern einen Wärmetauscher anzuordnen.

Schließlich ist aus dem deutschen Gebrauchsmuster DE 20 2006 019 616 U1 eine Heizungsanlage bekannt, bei der die in einem Heizkessel erzeugten Abgase durch einen Wärmetauscher geführt werden, der über Leitungen mit einem Pufferspeicher verbunden ist. Dem Wärmetauscher ist hierbei ein Bypass zugeordnet, mittels welchem die Abgase um den Wärmetauscher herumleitbar sind.

Demgemäß ist es eine Aufgabe der vorliegenden Erfindung, eine Anordnung zu schaffen, mit welchen sich der Gesamtwirkungsgrad beim Beheizen von Gebäuden mit einer Infrarot-Heizung verbessern lasst.

Diese Aufgabe wird gemäß der Erfindung durch die Merkmale von Anspruch 1 gelöst.

Gemäß der Erfindung zeichnet sich eine Anordnung zum Beheizen von Gebäuden mit einer Infrarot-Heizung, welche ein in einem ersten Gebäude, insbesondere in einer Halle, angeordnetes Strahlungsrohr aufweist, dem an einem ersten Ende ein durch einen Brenner erhitztes Gas zugeführt wird, dadurch aus, dass das zweite Ende des Strahlungsrohres mit einem Wärmetauscher in Strömungsverbindung steht, der von dem erhitzten Gas nach dem Verlassen des Strahlungsrohres beaufschlagt, bevorzugt durchströmt wird, und der über eine erste Kühlmittelzu- und Rückleitung bevorzugt mit einem Pufferspeicher für das Kühlmittel verbunden ist.

Weiterhin ist in einem zweiten Gebäude, beispielsweise einem Wohngebäude oder einem thermisch isolierten Teilbereich des ersten Gebäudes, ein Heizkörper oder ein Brauchwasserspender angeordnet, welcher vorzugsweise strömungsmäßig mit dem Pufferspeicher verbunden ist, um die thermische Energie des Kühlmittels - bevorzugt Wasser - im zweiten Gebäude in Form von Konvektionswärme oder von erwärmtem Brauchwasser abzugeben. Soweit nachfolgend von Brauchwasser gesprochen wird, soll dieser Begriff ebenso Trinkwasser oder auch Wasser, welches beispielsweise in Schwimmbädern als Badewasser zum Einsatz gelangt, mit einschließen.

Der Heizkörper ist beispielsweise ein bekannter Radiator, der von dem bevorzugt im Pufferspeicher gespeicherten Heißwasser durchflossen wird; kann aber ebenso auch ein von heißem Wasser durchflossener plattenförmiger Deckenheizstrahler sein.

Der Pufferspeicher ist bevorzugt als bekannter Schichtenspeicher ausgestaltet.

Obgleich der Einsatz eines Pufferspeichers in Hinblick auf die Flexibilität bei der Beheizung des zweiten Gebäudes von Vorteil ist, ist es jedoch ebenfalls möglich, den Heizkörper oder auch den Warmwasserspender direkt an den Wärmetauscher anzuschließen- Hierbei kann die Menge an dem Heizkörper und/oder dem Brauchwasserspender zugeführter Wärmeenergie z.B. über einen weiter unten erwähnten Bypass in Verbindung mit einer Weiche für das erhitzte Gas verändert werden, welche im Bereich der Leitungsverzweigung zwischen dem Wärmetauscher und dem Bypass stromaufwärts derselben angeordnet ist. Ein denkbarer Anwendungsfall hierfür ist die Beheizung des Badewassers in einer Schwimmhalle, die neben einer herkömmlichen Sporthalle angeordnet ist, in welcher die Beheizung in Energie sparender Weise über die Eingangs erwähnten Infrarot-Heizungen erfolgt, die z.B. im Bereich der Decke der Sporthalle aufgebängt sind.

Durch die Erfindung ergibt sich der Vorteil, dass die im erhitzten Gas nach dem Durchströmen des Strahlungsrohres verbleibende Restwärme über den Wärmetauscher und das Kühlmittel in den Pufferspeicher überführt werden kann, in welchem diese zum Beheizen eines benachbarten Wohngebäudes, eines abgetrennten Bereichs im ersten Gebäude, oder aber zum Erwärmen von Brauchwasser zur Verfügung steht. Im Falle von Wasser als Kühlmittel, bzw. als Speichermedium kann die Temperatur im Pufferspeicher z.B. 60 bis 80 °C betragen.

Gemäß der Erfindung ist dem Strahlungsrohr ein Gebläse zugeordnet, welches das erhitzte Gas durch den Wärmetauscher hindurch aus dem Strahlungsrohr herausfördert. Hierdurch ergibt sich der Vorteil, dass der Wärmetauscher bei einer vorgegebenen Größe zur Vergrößerung der thermische wirksamen Oberfläche mit einer Vielzahl von Druchtrittskanälen für das erhitzte Gas - nachfolgend auch als Abgas bezeichnet - versehen werden kann, ohne dass der erhöhte Strömungswiderstand sich nachteilig auf die Erzeugung des heißen Gases im Brenner auswirkt.

Hierbei ist es von besonderem Vorteil, dass das Gebläse stromaufwärts des Wärmetauschers angeordnet ist, da in diesem Falle die Temperatur des Abgases so weit reduziert werden kann, dass dieses im Wärmetauscher kondensiert und hierdurch die Kondensationswärme des Abgases ebenfalls mit zum Erwärmen des Pufferspeichers genutzt werden kann.

Das zweite Ende des Strahlungsrohres ist über eine Zuleitung mit dem Gebläse verbunden, die gegenüber der Umgebung thermisch isoliert ist. Hierdurch ergibt sich der Vorteil, dass die Wärmeverluste infolge von Konvektion im ersten Gebäude weiter reduziert werden können, so dass die damit verbundene zusätzliche Wärmeenergie im Abgas ebenfalls mit zur Erwärmung des zweiten Gebäudes genutzt werden kann, was den Wirkungsgrad weiter vergrößert.

Durch den Einsatz einer dem Gebläse und dem Wärmetauscher nachgeordneten Drosselklappe lässt sich in vorteilhafter Weise nicht nur der Volumenstrom an erhitztem Abgas verändern, sondern es besteht zudem die Möglichkeit zusätzlich auch das Kondensationsverhalten des Abgases im Wärmetauscher zu regulieren, wozu beispielsweise eine Steuerungs- und Regelungseinrichtung vorgesehen sein kann, die die Stellung der Drosselklappe in Abhängigkeit von einer weiteren, dem Brenner vorgeordneten Drosselklappe und/oder der Drehzahl des Gebläses verändert.

Nach einer weiteren, bereits zuvor angedeuteten Ausführungsform des erfindungsgemäßen Verfahrens ist dem Wärmetauscher bevorzugt ein Bypass zugeordnet, über welchen das erhitzte Gas am Wärmetauscher vorbei geleitet werden kann, um bei einer Überhitzung des Kühlmediums, bzw. des Pufferspeichers eine Beschädigung desselben zu verhindern.

Das Speichermedium für die vom Kühlmittel übertragene Wärme im Pufferspeicher ist bevorzugt Wasser, kann jedoch auch ein anderes Medium sein. In gleicher Weise kann der Pufferspeicher auch aus einem festen Material wie Keramik, Metall, Schamottsteinen oder dergleichen bestehen, welches vom Kühlmedium erwärmt wird.

Obgleich die zuvor beschriebene Anordnung im Zusammenhand mit einer Infrarot-Heizung eingesetzt werden kann, die lediglich ein Strahlungsrohr umfasst, ist es gemäß einem weiteren der Erfindung zu Grunde liegenden Gadanken ebenfalls möglich, zwei oder mehr Infrarot-Heizungen mit entsprechenden Strahlungsrohren zum Beheizen des ersten Gebäudes oder auch weiterer Gebäude einzusetzen, die über eine gemeinsame Abgassammelleitung mit dem Wärmetauscher verbunden sind, welche durch einen bekannten Isolierwerkstoff thermisch gegenüber der Umgebung isoliert ist.

Die Erfindung wird nachfolgend mit Bezug auf die Zeichnung anhand einer bevorzugten Ausführungsform beschrieben.

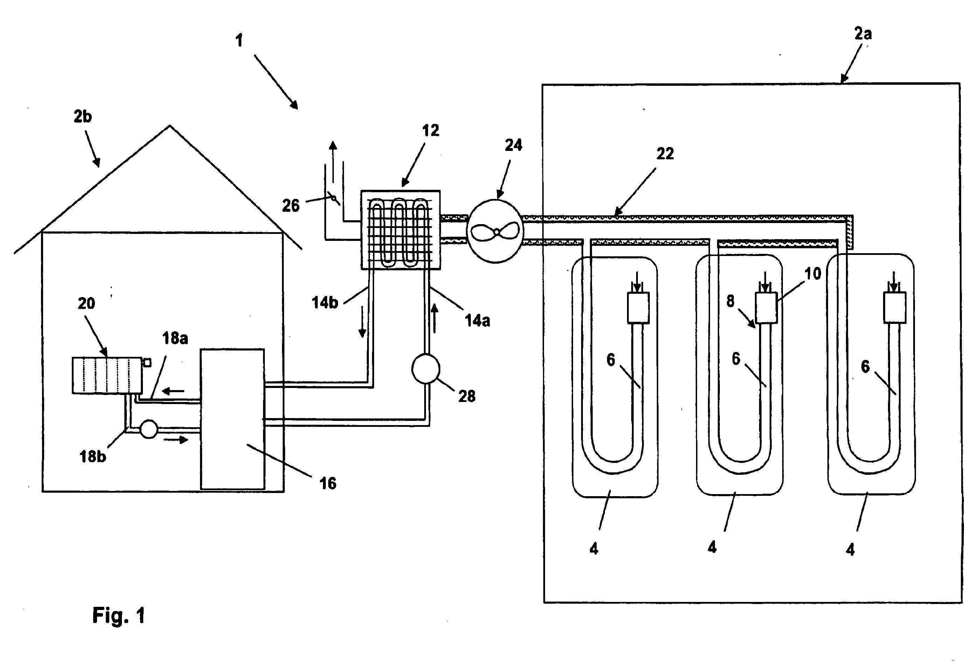

In der Zeichnung zeigt Fig. 1 eine schematisierte Ansicht der wesentlichen Komponenten der erfindungsgemäßen Anordnung zum Beheizen eines ersten und zweiten Gebäudes.

Wie in Fig. 1 gezeigt ist, umfasst eine erfindungsgemäße Anordnung 1 eine in einem ersten Gebäude 2a angeordnete Infrarot-Heizung 4 mit einem Strahlungsrohr 6, dem an einem ersten Ende 8 ein durch einen Brenner 10 erhitztes Gas zugeführt wird. Bei dem erhitzten Gas handelt es sich vorzugsweise um das Abgas des Brenners 10, der bei der bevorzugten Ausführungsform als bekannter Gasbrenner ausgestaltet ist.

Wie der Darstellung von Fig. 1 weiterhin entnommen werden kann, umfasst die gezeigte Anordnung 1 weiterhin einen Wärmetauscher 12, der von dem erhitzten Gas nach dem Verlassen des Strahlungsrohres 6 durchströmt wird, und der über eine erste Kühlmittelzuleitung 14a sowie eine erste Kühlmittelrückleitung 14b strömungsmäßig mit einem Pufferspeicher 16 verbunden ist, in welchem das Kühlmittel - vorzugsweise Wasser - ein im Pufferspeicher 16 enthaltenes Wärmespeichermedium, bevorzugt ebenfalls Wasser, erwärmt. Der Pufferspeicher 16 ist über eine zweite Zuleitung 18a sowie eine zweite Rückleitung 18b mit einem Heizkörper 20 oder auch mit einem nicht gezeigten Brauchwasserspender verbunden, um die im Pufferspeicher 16 gespeicherte thermische Energie im zweiten Gebäude 2b in Form von Konvektionswärme abzugeben oder in Form von erwärmtern Brauchwasser bereitzustellen. Das zweite Gebäude 2b ist beispielsweise ein Wohngebäude oder aber auch ein Teilbereich des ersten Gebäudes 2a, beispielsweise ein Aufenthaltsraum in einer Sporthalle oder einer Fabrikhalle oder dergleichen. Der Heizkörper 20, der z.B. auch als Fußbodenheizung ausgestaltet sein kann, kann jedoch ebenfalls in nicht dargestellter Weise über die Leitungen 14a, 14b, bzw. 18a, 18b direkt mit dem Wärmetauscher 12 verbunden sein, ohne dass ein Pufferspeicher 16 zum Einsatz gelangt.

Wie der Darstellung von Fig. 1 weiterhin entnommen werden kann, ist dem Strahlungsrohr 6 über eine Zuleitung 22, die bei der gezeigten Anordnung 1 als eine thermisch isolierte Abgas-Sammelleitung für insgesamt drei Infrarot-Heizungen 4 ausgestaltet ist, ein Gebläse 24 zugeordnet, welches das erhitzte Gas durch den Wärmetauscher 12 hindurch aus den Strahlungsrohren 6 herausfördert.

Erfindungsgemäß ist das Gebläse 24 stromaufwärts des Wärmetauschers 12 angeordnet, wobei dem Gebläse 24 vorzugsweise eine Drosselklappe 26 nachgeordnet ist, über welche die durch das Strahlungsrohr 6 hindurch geführte Menge an erhitztem Gas veränderbar ist

Der Wärmetauscher 12 besitzt bevorzugt eine solche Größe, bzw. eine solche thermisch wirksame Fläche, dass die Temperatur des erhitzten Gases im Wärmetauscher 12 nach dem Verlassen des Strahlungsrohres 6 auf einen Wert abgesenkt wird, bei welchem das erhitzte Gas im Wärmetauscher 12 kondensiert.

Schließlich kann dem Wärmetauscher 12 ein in der Figur nicht gezeigter Bypass zugeordnet sein, über welchen das erhitzte Gas zur Vermeidung einer Überhitzung des Pufferspeichers 16 am Wärmetauscher 12 vorbei geleitet werden kann.

Obgleich das Kühlmittel bevorzugt in einem geschlossenen Kreislauf über eine schematisch angedeutete Pumpe 28 durch den Wärmetauscher 12 und den Pufferspeicher 16 zirkuliert wird - was bevorzugt ebenso für das durch den Heizkörper 20 über die zweite Zuleitung 18a und Rückleitung 18b zirkuliert Heizmedium gilt-, kann es alternativ vorgesehen sein, dass das Warmespeichermedium des Pufferspeichers 16 direkt durch den Wärmetauscher 12, bzw. den Heizkörper 20 geleitet wird.

### Bezugszeichenliste

- 1: erfindungsgemäße Anordnung
- 2a: erstes Gebäude z.B. Sport- oder Fabrikhalle
- 4: Infrarot-Heizung
- 6: Strahlungsrohr
- 8: erstes Ende
- 10: Brenner
- 12: Wärmetauscher
- 14a: Kühlmittelzuleitung
- 14b: Kühlmittelrückleitung
- 16: Pufferspeicher
- 18a: zweite Zuleitung
- 18b: zweite Rückleitung
- 20: Heizkörper
- 22: Zuleitung/Sammelleitung
- 24: Gebläse
- 26: Drosselklappe
- 28: Pumpe

## Patentansprüche

1. Anordnung zum Beheizen von Gebäuden, umfassend eine in einem ersten Gebäude (2a) angeordnete Infrarot-Heizung (4) mit einem Strahlungsrohr (6), dem an einem ersten Ende (8) ein durch einen Brenner (10) erhitztes Gas zugeführt wird, mit einem Wärmetauscher (12), der von dem erhitzten Gas nach dem Verlassen des Strahlungsrohres (6) beaufschlagt wird, sowie einem in einem zweiten Gebäude (2b) angeordneten Heizkörper (20) oder Brauchwasserspender, der über Leitungen (14a, 14b, 18a, 18b) strömungsmäßig mit dem Wärmetauscher (12) verbunden ist, um die vom Wärmetauscher (12) aufgenommene thermische Energie im zweiten Gebäude (2b) in Form von Konvektionswärme oder von erwärmtem Brauchwasser abzugeben, wobei dem Strahlungsrohr (6) ein Gebläse (24) zugeordnet ist, welches das erhitzte Gas durch den Wärmetauscher (12) hindurch aus dem Strahlungsrohr (6) herausfördert, das Gebläse (24) stromaufwärts des Wärmetauscher (12) angeordnet ist, und wobei das zweite Ende des Strahlumgsrohres (6) über eine Zuleitung (22) mit dem Gebläse (24) verbunden ist, die gegenüber der Umgebung thermisch isoliert ist.

2. Anordnung nach Anspruch 1,
**dadurch gekennzeichnet,**
**dass** der Wärmetauscher (12) über eine erste Kühlmittelzu- und Rückleitung (14a, 14b) mit einem Pufferspeicher (16) verbunden ist, der zur Abgabe der im Pufferspeicher (16) gespeicherten thermischen Energie im zweiten Gebäude (2b) mit dem Heizkörper (20) oder dem Brauchwasserspender über Leitungen (18a, 18b) verbunden ist.

3. Anordnung nach einem der Ansprüche 1 oder 2,
**dadurch gekennzeichnet,**
**dass** dem Gebläse (24) eine Drosselklappe (26) nachgeordnet ist, über welche die durch das Strahlungsrohr (6) hindurch geführte Menge an erhitztem Gas veränderbar ist.

4. Anordnung nach einem der Ansprüche 1 bis 3,
**dadurch gekennzeichnet,**
**dass** der Wärmetauscher (12) eine solche Größe besitzt, dass die Temperatur des erhitzten Gases im Wärmetauscher bis in den Bereich der Kondensationstemperatur des Gases hinein verringert wird.

5. Anordnung nach einem der Ansprüche 1 bis 4,
**dadurch gekennzeichnet,**
**dass** dem Wärmetauscher (12) ein Bypass zugeordnet ist, über welchen das erhitzte Gas am Wärmetauscher (12) vorbei leitbar ist.

6. Anordnung nach einem der Ansprüche 1 bis 5,
**dadurch gekennzeichnet,**
**dass** die Strahlungsrohre (6) von weiteren Infrarot-Heizungen (4) zum Beheizen des ersten Gebäudes (2a) oder weiterer Gebäude über eine gemeinsame, thermisch isolierte Sammelleitung (22) mit dem Wärmetauscher (12) verbunden sind.

## Claims

1. An arrangement for carrying out the method as claimed in one of the preceding claims, comprising an infrared heating system (4) arranged in a first building (2a), which infrared heating system (4) has a radiant tube (6) to which a gas which is heated by a burner (10) is supplied at a first end (8), **characterized by** a heat exchanger (12), to which the heated gas is supplied after it leaves the radiant tube (6), and by a heating body (20) or industrial water dispenser arranged in a second building (2b), which heating body (20) or industrial water dispenser is in fluid communication with the heat exchanger (12) via lines (14a, 14b, 18a, 18b) in order to give off in the second building (2b) the thermal energy received by the heat exchanger (12) in the form of heat of convection or of heated industrial water, wherein

2. The arrangement as claimed in claim 10, **characterized in that** the heat exchanger (12) is connected, via a first coolant supply and return line (14a, 14b), to a buffer storage tank (16) which is connected to the heating body (20) or the industrial water dispenser via lines (18a, 18b) for giving off in the second building the thermal energy stored in the buffer storage tank (16).The radiant tube (6) is assigned a blower (24) which conveys the heated gas through the heat exchanger (12) and out of the radiant tube (6),the blower (24) is arranged upstream of the heat exchanger (12) and wherein
the second end of the radiant tube (6) is connected to the blower (24) via a supply line (22) which is thermally insulated with respect to the environment.

3. The arrangement as claimed in one of claims 1to 2, **characterized in that** a throttle valve (26), which can be used to vary the amount of heated gas guided through the radiant tube (6), is arranged downstream of the blower (24).

4. The arrangement as claimed in one of claims 1 to 3, **characterized in that** the size of the heat exchanger (12) is such that the temperature of the heated gas in the heat exchanger is reduced into the condensation range of the gas.

5. The arrangement as claimed in one of claims 1 to 4, **characterized in that** the heat exchanger (12) is assigned a bypass line, via which the heated gas can be guided past the heat exchanger (12).

6. The arrangement as claimed in one of claims 1 to 5, **characterized in that** the radiant tubes (6) of other infrared heating systems (4) are connected to the heat exchanger (12) via a common, especially thermally insulated manifold (22) for heating the first building (2a) or other buildings.

## Revendications

1. Dispositif destiné à chauffer des bâtiments, comprenant un chauffage infrarouge (4) agencé dans un premier bâtiment (2a) avec un tube radiant (6), auquel, au niveau d'une première extrémité (8), est amené un gaz chauffé grâce à un brûleur (10), avec un échangeur de chaleur (12), qui est alimenté en gaz chauffé ayant quitté le tube radiant (6), ainsi qu'un élément chauffant (20) ou un distributeur d'eau industriel, agencé dans un deuxième bâtiment (2b), qui est relié fluidiquement à l'échangeur de chaleur (12) par l'intermédiaire de conduites (14a, 14b, 18a, 18b) afin de fournir l'énergie thermique recueillie par l'échangeur de chaleur (12) dans le deuxième bâtiment (2b) sous forme de chaleur de convexion ou d'eau industrielle chauffée, dans lequel une soufflante (24) est associée au tube radiant (6), ladite soufflante obligeant le gaz chauffé en provenance du tube radiant (6) à traverser l'échangeur de chaleur (12), la soufflante (24) étant agencée en amont de l'échangeur de chaleur (12) par rapport au sens de circulation, et dans lequel la deuxième extrémité du tube radiant (6) est reliée à la soufflante (24) par l'intermédiaire d'une conduite (22), ladite soufflante étant isolée thermiquement par rapport à l'environnement.

2. Dispositif selon la revendication 1,
**caractérisé en ce que**,
l'échangeur de chaleur (12) est relié à un réservoir tampon (16) par l'intermédiaire d'une première conduite d'arrivée et de retour d'agent réfrigérant (14a, 14b), ledit réservoir tampon étant relié par l'intermédiaire de conduites (18a, 18b) à l'élément chauffant (20) ou au distributeur d'eau industrielle afin de fournir dans le deuxième bâtiment (2b) l'énergie thermique emmagasinée dans le réservoir tampon (16).

3. Dispositif selon la revendication 1 ou 2,
**caractérisé en ce que**,
une vanne-papillon (26) est associée à la soufflante et permet de modifier la quantité de gaz chauffé amenée à traverser le tube radiant (6).

4. Dispositif selon l'une quelconque des revendications 1 à 3,
**caractérisé en ce que**,
l'échangeur de chaleur (12) présente une taille telle que la température du gaz chauffé dans l'échangeur de chaleur est réduite jusqu'à se situer dans la plage de la température de condensation du gaz.

5. Dispositif selon l'une quelconque des revendications 1 à 4,
**caractérisé en ce que**,
une dérivation est associée à l'échangeur de chaleur (12) par laquelle le gaz chauffé peut être passé à côté de l'échangeur de chaleur (12).

6. Dispositif selon l'une quelconque des revendications 1 à 5,
**caractérisé en ce que**,
les tubes radiants (6) appartenant à d'autres chauffages infrarouges (4) sont reliés à l'échangeur de chaleur (12) par l'intermédiaire d'une conduite collectrice (22) thermiquement isolée commune afin de chauffer le premier bâtiment (2a) ou d'autres bâtiments.
